(19) Europäisches Patentamt
European Patent Office
Office européen des brevets

(11) **EP 1 407 665 B1**

(12) **EUROPEAN PATENT SPECIFICATION**

(45) Date of publication and mention
of the grant of the patent:
**05.05.2010 Bulletin 2010/18**

(21) Application number: **02733247.7**

(22) Date of filing: **29.05.2002**

(51) Int Cl.:
*A01N 25/14* ^(2006.01)   *A01N 37/24* ^(2006.01)
*A01N 47/12* ^(2006.01)   *A01N 25/12* ^(2006.01)

(86) International application number:
**PCT/JP2002/005222**

(87) International publication number:
**WO 2002/102152 (27.12.2002 Gazette 2002/52)**

(54) **GRANULATED WETTABLE POWDER**

GRANULATFÖRMIGES SPRITZPULVER

POUDRE MOUILLABLE GRANULEUSE

(84) Designated Contracting States:
**FR NL**

(30) Priority: **13.06.2001 JP 2001178889**

(43) Date of publication of application:
**14.04.2004 Bulletin 2004/16**

(73) Proprietor: **KUMIAI CHEMICAL INDUSTRY CO., LTD.**
**Tokyo 110-0008 (JP)**

(72) Inventors:
• **KURITA, Kazunori**
**Shimizu-shi, Shizuoka 424-0052 (JP)**
• **MISUMI, Yuji**
**Ogasa-gun, Shizuoka 439-0031 (JP)**

(74) Representative: **Hartz, Nikolai**
**Wächtershäuser & Hartz**
**Patentanwaltspartnerschaft**
**Weinstrasse 8**
**80333 München (DE)**

(56) References cited:
**GB-A- 2 234 678**   **JP-A- 6 145 015**
**JP-A- 7 179 304**   **JP-A- 7 179 305**
**JP-A- 8 283 108**   **JP-A- 9 216 805**
**JP-A- 11 269 016**   **JP-A- 60 222 403**
**US-A- 5 523 276**

Remarks:
The file contains technical information submitted after the application was filed and not included in this specification

**Description**

TECHNICAL FIELD

The present invention relates to a novel granulated wettable powder excellent in dispersibility and suspensibility in water and a process for its production.

BACKGROUND ART

In many cases, agricultural chemicals are processed into dust, granules, wettable powders, emulsifiable concentrates, SC or EW and then applied. Among them, dusts and granules are applied as formulated or by means of application machines. Whereas, an emulsifiable concentrate, a wettable powder, SC or EW is diluted mainly with water or the like to a predetermined concentration and then applied.

In most cases, an emulsifiable concentrate is prepared by dissolving an agricultural chemical active ingredient in an organic solvent, then adding an emulsifier, etc, followed by processing. Accordingly, formulation is possible so long as the agricultural chemical active ingredient is soluble in an organic solvent. Further, the organic solvent to be used is flammable in many cases, and because of a possible danger of fire, etc., sufficient care is required for its handling, transportation or storage. Further, the organic solvent has a problem of its toxicity or phytotoxicity accompanying its use.

On the other hand, as is different from an emulsifiable concentrate, a wettable powder is one prepared by pulverizing an agricultural chemical active ingredient into fine particles or having it adsorbed on a highly oily absorptive fine powder, followed by pulverization, then incorporating a surfactant having a dispersibility and wet malleability, followed by processing. Accordingly, even an agricultural chemical ingredient which is not soluble in an organic solvent, may be processed. Not only that, there will be no danger of fire or the like in its handling, transportation or storage, since no organic solvent is required. Further, a problem of toxicity or phytotoxicity attributable to the use of an organic solvent, is eliminated.

However, conventional common wettable powders have the following drawbacks. Namely, they are composed of fine particles of ingredients including the agricultural chemical active ingredient and thus have problems such that they have small apparent specific gravities and thus are bulky, a fine powder tends to swirl up at the time of diluting it to prepare an application solution, such being undesirable for the health of the worker, and there is a difficulty in the operation of measuring and dividing the agricultural chemical.

A flowable such as SC or EW is a formulation having the drawbacks of a wettable powder such as dusting or difficulty in measurement, overcome by formulating it into a suspended or emulsified formulation, but it is a liquid formulation having a relatively high viscosity and thus has problems in discharging from a container or in the disposal of the used container because of the deposition of the formulation in the container.

Therefore, there has been an attempt to granulate the wettable powder in recent years.

A granulated wettable powder is one having an agricultural chemical active ingredient, a surfactant and, if necessary, other adjuvants, mixed and granulated. Water dispersible granules are known from GB-A 2 234 678. As such a granulation method, an extrusion granulation method, a spray drying granulation method, a fluidized bed granulation method, a tumbling granulation method or a compression granulation method may, for example, be mentioned. By granulating a wettable powder, the drawbacks of a wettable powder, such as the bulkiness, dusting and difficulty in measurement, and programs attributable to the viscosity of a flowable, will be solved.

A granulated wettable powder is usually diluted with from a few tens to a few thousands times of water to form a dispersion of fine particles, which will be applied to an agricultural field. It is necessary that after the granulated wettable powder is put in water, it will quickly be disintegrated in water, and the agricultural chemical active ingredient and the adjuvant components will maintain a uniform stabilized suspended state. However, for example, in a case where a conventional wettable powder formulation is granulated, the disintegration dispersibility in water is poor, whereby a uniform dispersion can hardly be obtained. Further, there has been a problem such that a stabilized suspended state can hardly be maintained with time.

As a method for solving such problems, there has been proposed, for example, a method wherein a specific surfactant or a combination of a plurality of surfactants, is incorporated (JP-A-59-193803, JP-A-62-36302, JP-A-5-43402, JP-A-7-126106, JP-A-8-34702), a method wherein starch and a water-soluble inorganic salt are incorporated (JP-A-51-1649), a method wherein a saccharide, a naphthalenesulfonate surfactant or an alkali metal phosphate, is incorporated (JP-A-57-163303), a method wherein one or more members selected from a polymer of an unsaturated carboxylic acid, a formalin condensate of a styrenesulfonate and an alkali metal phosphate, are incorporated (JP-A-61-236701), a method wherein an anionic surfactant and bentonite are incorporated (JP-A-62-263101), or a method wherein a surfactant and a kaolin type clay of from 2 to 10 $\mu$m are incorporated (JP-A-3-264502). However, the disintegration dispersibility in water of such conventional granular wettable powders is substantially influenced particularly by the type and nature of the agricultural chemical active ingredient, and they have not necessarily showed adequate disintegratability or dispersibility in water.

## DISCLOSURE OF THE INVENTION

It is an object of the present invention to improve the dispersibility and suspensibility in water of a granulated wettable powder without being influenced by the type or nature of the agricultural chemical active ingredient.

The present invention will be generally described. The first invention of the present invention is an invention relating to a granulated wettable powder characterized by comprising, as essential ingredients, fine particles of a specific solid agricultural chemical active ingredient, and a specific basic white carbon having a volume median diameter of from 2 to 7.5 $\mu$m as defined by claim 1. The fine particles have malleability at room temperature and show a caking property even in storage at a temperature not higher than the melting point.

Further, the second invention of the present invention is an invention relating to a process for producing a granulated wettable powder, characterized by compounding, as essential ingredients, fine particles of a specific solid agricultural chemical active ingredient, and a specific basic white carbon having a volume median diameter of from 2 to 7.5 $\mu$m as defined by claim 8.

The present inventors have conducted a study to solve problems of the conventional granulated wettable powders and as a result, have found that a granulated wettable powder characterized by comprising, as essential ingredients, fine particles of a specific solid agricultural chemical active ingredient which have malleability at room temperature and which show a caking property even in storage at a temperature not higher than the melting point, and a specific basic white carbon having a volume median diameter of from 2 to 7.5 $\mu$m as defined by claim 1, has good disintegration dispersibility in water without being influenced by the type or nature of the agricultural chemical active ingredient, and have accomplished the present invention.

## BEST MODE FOR CARRYING OUT THE INVENTION

Now, the present invention will be described in detail.

"Malleability" which the solid agricultural chemical active ingredient of the present invention shows, is a nature such that when the particles of the solid agricultural chemical active ingredient of a few mm are pressed by a metal spatula or the like, they may not only be crushed but spread over the pressed surface and further fix to the pressed surface. The specific solid agricultural chemical active ingredient to be used in the present invention has malleability at room temperature (meant for 25°C) and shows a caking property even in storage at a temperature not higher than the melting point.

It is an insecticide selected from spinosad, DMTP, tebufenpyrad, pyridaphenthion, dimethylvinphos or fenothiocarb, a fungicide selected from ipconazole, isopropyl[(S)-1-[(R)-1-(6-fluorobenzothiazol-2-yl)ethylcarbamoyl]-2-methylpropyl]carbamate, mepronil, pencycuron, phthalide, cymoxanil, folpet or mepanipyrim, or a herbicide selected from simetryn, cyhalofop-butyl, fentrazamide, atrazine, fluthacet-methyl, dithiopyr or pyriminobac-methyl.

The malleability is substantially influenced by the purity or crystal form of the agricultural chemical active ingredient, and accordingly, a due care is required for the judgment as to the presence or absence of the malleability. Such agricultural chemical active ingredients which have malleability at room temperature and which show a caking property even in storage at a temperature not higher than the melting point, may be used alone or in combination as a mixture of two or more of them. Further, such an agricultural chemical active ingredient which has malleability at room temperature and which shows a caking property even in storage at a temperature not higher than the melting point, may be used as mixed with another solid agricultural chemical active ingredient showing no malleability at room temperature or with an agricultural chemical active ingredient which is liquid at room temperature. The solid agricultural chemical active ingredient showing no malleability at room temperature or the agricultural chemical active ingredient which is liquid at room temperature, to be mixed, may be any one of compounds which are generally useful as agricultural chemicals such as insecticides, fungicides, herbicides or plant growth regulators.

The concentration of such an agricultural chemical active ingredient in the granulated wettable powder is not particularly limited. However, from the viewpoint of the granulation property or bioactivity, it is usually preferably at most 85 wt%, particularly preferably from about 5 to 70 wt%.

In the present invention, the fine particles of the solid agricultural chemical active ingredient which have malleability at room temperature and which show a caking property even in storage at a temperature not higher than the melting point, can be obtained by subjecting the solid agricultural chemical active ingredient alone to impact pulverization by means of e.g. a pin mill or a hammer mill or to pulverization in a high speed stream by means of e.g. an air mill and is made to have a volume media diameter of from 1 to 15 $\mu$m. In the present invention, "volume median diameter" means a particle diameter corresponding to 50% from the bottom position or the top position in the integrating particle diameter distribution measured based on the volume. At the time of the pulverization of an agricultural chemical active ingredient which shows malleability at room temperature, it is frequently observed that the pulverization property deteriorates due to sticking of the pulverized product to the interior of the pulverizer during the pulverization, and the above-mentioned desired volume median diameter range can not be reached. In such a case, the pulverization property can be improved by adding a pulverization assistant such as diatomaceous earth or silica sand. Further, white carbon can also be used as a pulverization assistant. Particularly, a basic white carbon by the present invention is preferred, whereby not only the pulverizing property is improved by prevention of sticking of the pulverized product to the interior of the pulverizer during the pulverization, but also re-agglomeration in a step of producing fine particles of the solid agricultural chemical active ingredient suitably pulverized to a volume median diameter of from 1 to 15 $\mu$m or in storage, can be prevented to improve the disintegration dispersibility in water of the granulated wettable powder. Further, the effect for preventing caking of the granulated wettable powder during the storage can also be obtained. In a case where a basic white carbon is employed as the pulverization assistant, its volume median diameter may be from 2 to 7.5 $\mu$m after the pulverization. The volume median diameter can easily be measured by a laser diffraction scattering particle size distribution measuring apparatus.

In the present invention, the basic white carbon is a non-crystalline silicon dioxide powder, of which a 1 wt% aqueous suspension usually has a pH of from 8 to 14, preferably a pH of from 9 to 13, more preferably a pH of from 10 to 12. The volume median diameter of the primary particles of the basic white carbon of the present invention is from 2 to 7.5 $\mu$m. However, even with one having a volume median diameter larger than this volume median diameter range, it is possible to obtain one having a volume median diameter within a particle diameter range of from 2 to 7.5 $\mu$m by e.g. pulverization. As the basic white carbon which can be used in the present invention, specifically, CARPLEX #100 or CARPLEX #1120, tradename of Shionogi & Co., Ltd., TOKUSEAL AL-1, tradename, of TOKUYAMA Corp., NIPSIL NA or NIPSIL G300, tradename of Nippon Silica Industrial Co., Ltd., or DUROSIL or EXTRUSIL, tradename of Degussa AG, may, for example, be mentioned.

In the present invention, the content of the basic white carbon in the granulated wettable powder is usually from 0.1 to 50 wt%, but it may be optionally changed depending upon the concentration of the active ingredient in the formulation and is preferably from about 1 to 20 wt%.

As the surfactant to be used in the present invention, any one of usual nonionic surfactants, anionic surfactants, cationic surfactants, etc. which are commonly used for granules or granulated wettable powders, may be employed. Such surfactants may be used alone or in combination as a mixture of two or more of them.

The nonionic surfactant may be any nonionic surfactant such as a polyoxyethylene alkyl ether, a polyoxyethylene alkyl phenyl ether, a polyoxyethylene polyoxypropylene ether, a polyoxyethylene alkyl ester, a polyoxyethylene sorbitan alkyl ester, a polyoxyethylene polyoxypropylene block copolymer, a sorbitan alkyl ester or a higher fatty acid alkanolamide. Such nonionic surfactants may be used alone or in combination as a mixture of two or more of them.

The cationic surfactant may be any one such as an alkylamine salt or a quaternary amine ammonium salt. Such cationic surfactants may be used alone or in combination as a mixture of two or more of them.

The anionic surfactant may, for example, be a naphthalenesulfonic acid polycondensate salt, an alkenyl sulfonate, a naphthalene sulfonate, a formalin condensate of a naphthalene sulfonate, an alkylnaphthalene sulfonate, a formalin condensate of an alkylnaphthalene sulfonate, a lignin sulfonate, an alkylaryl sulfonate, an alkylaryl sulfonate sulfate, a polystyrene sulfonate, a polycarboxylates, a polyoxyethylene alkyl ether sulfuric acid ester salt, a polyoxyethylene alkyl aryl ether sulfuric acid ester salt, an alkyl sulfosuccinate, an alkyl sulfate, an alkyl ether sulfonate, or a higher fatty acid alkali metal salt. Such anionic surfactants may be used alone or in combination as a mixture of two or more of them.

As the surfactant to be used in the present invention, an anionic surfactant is preferred. It is particularly preferred to employ at least one member selected from an alkyl sulfate, an alkylnaphthalene sulfonate, a formalin condensate of an alkylnaphthalene sulfonate, and a lignin sulfonate.

In the wettable powder of the present invention, a carrier for formulation, such as a mineral carrier, a water-soluble carrier or a vegetable carrier, is usually contained. As the mineral carrier, diatomaceous earth, talc, clay, calcium carbonate, bentonite, acid clay, attapulgite, zeolite, sericite, sepiolite or calcium silicate may, for example, mentioned. As the water-soluble carrier, ammonium sulfate, urea, dextrin, lactose, fructose, sucrose, glucose, sodium chloride, milabilite, sodium carbonate, sodium bicarbonate, maleic acid, citric acid, fumaric acid, malic acid or a polyethylene glycol having an average molecular weight of from 6000 to 20000, may, for example, be mentioned. As the vegetable carrier, wheat flour, wood powder, starch, bran, soybean powder or a fibrous crop plant pulverized product may, for example, be mentioned. The content of the carrier for formulation in the wettable powder of the present invention is usually from 0.1 to 90 wt%, preferably from 0.5 to 75 wt%. The wettable powder of the present invention may contain other adjuvants such as a water-soluble polymer, a solvent, an absorptive fine powder, a binder, a pulverization assistant, a decomposition-preventing agent, a colorant, a defoaming agent, an effect-enhancing agent, a perfume, a builder, etc., as the case requires.

The wettable powder of the present invention can be prepared, for example, by the following process, but the production process is not limited thereto. The solid agricultural chemical active ingredient only, a mixture thereof with a suitable pulverizing assistant, a surfactant, a carrier, etc., or all ingredients, are pulverized by a dry system pulverizer such as a jet-o-miser or a hammer mill to bring the volume median diameter of the solid agricultural chemical active ingredient to from 1 to 15 μm, and other ingredients such as a carrier, adjuvants, etc. are added, followed by mixing, kneading, then granulation by means of a granulator and drying, to obtain it. The granulation can be carried out by e.g. an extrusion granulator, a pressure granulator, a fluidized bed granulator, an agitation granulator or a tumbling granulator. Further, it may also be obtained by adding necessary amounts of the agricultural chemical active ingredient, a surfactant and other ingredients such as an optional carrier to a suitable amount of water, pulverizing the mixture by means of a wet system pulverizer such as a ball mill, a dyno-mill or a sand grinder to obtain an aqueous suspension, further adding and mixing suitable amounts of other components such as a surfactant, a carrier, etc. thereto, as the case requires and spray drying the mixture by a spray dryer. It is also possible that the aqueous suspension is prepared with a small amount of water, and other components such as a carrier, etc. are further added and mixed to obtain a kneaded product which can be granulated by an extrusion granulator, a pressure granulator, an agitation granulator or a tumbling granulator.

The basic white carbon in the present invention can be added in the form of a pulverization assistant at the time of pulverization of the solid agricultural chemical active ingredient. Otherwise, one pulverized to have a volume median diameter of from 2 to 7.5 μm may be added, for example, during mixing or kneading prior to the granulation.

The particle size distribution of the granulated wettable powder of the present invention, thus obtained, is preferably such that at least 95% of the granulated wettable powder has a size of preferably from 12 to 48 mesh, particularly preferably from 16 to 48 mesh. Such a granulated wettable powder of the present invention has merits such that (1) it is excellent in the disintegration dispersibility in water irrespective of the nature of the agricultural chemical active ingredient, (2) it is excellent in suspensibility irrespective of the nature of the agricultural chemical active ingredient, and (3) caking during the storage can be prevented. It is thus, widely employed as an agricultural chemical such as a fungicide, an insecticide, a herbicide, or a plant-growth-regulating agent.

Now, the present invention will be described in further detail with reference to Examples, Comparative Example and Test Examples, but it should be understood that the present invention is by no means restricted thereto. Here, "parts" and "%" are all based on weight. Among solid agricultural chemical active ingredients used in the following Examples and Comparative Examples, mepronil, fenothiocarb, isopropyl[(S)-1-[(R)-1-(6-fluorobenzothiazol-2-yl)ethylcarbamoyl]-2-methylpropyl]carbamate, and folpet, showed malleability at room temperature and a caking property even in storage at a temperature not higher than the respective melting points. The volume median diameters, of which measuring methods are not specified, are values measured by a laser diffraction scattering particle size distribution measuring apparatus.

EXAMPLE 1

90 Parts of mepronil and 10 parts of a basic white carbon (CARPLEX #1120, tradename of Shionogi & Co., Ltd., pH of 1% suspension: 11.5, volume median diameter: 13 μm) were uniformly mixed, followed by pulverization by a jet-o-miser to obtain a premix of mepronil. The volume median diameter of mepronil in the premix was measured by a precipitation method (the method disclosed at pages 55 to 56 in Noyaku Seizaigaku, first edition, published on January 20, 1965, edited by Terumaro Suzuki and published by Kabushiki Kaisha Naneido, hereinafter, the same applies in each Example) and found to be 8.5 μm. Further, the volume median diameter of the basic white carbon in this premix was measured and found to be 6.8 μm. The volume median diameter of the basic white carbon is the volume median diameter of the residue obtained after washing the premix with acetone a few times.

50 Parts of the above premix, 1 part of NEW CALGEN WG-6, tradename of Takemoto Oil & Fat Co., Ltd., 9 parts of DEMOL MS, tradename of Kao Corporation, and 40 parts of calcium carbonate, were mixed by means of a mixer, and then, about 10 parts of water was added thereto, followed by kneading and granulation by means of an extrusion granulator equipped with a screen having a pore size of 0.6 mm. After drying at 60°C, the particle size was adjusted by a sieve of from 16 to 48 mesh to obtain a granulated wettable powder.

EXAMPLE 2

63.7 Parts of fenothiocarb and 36.3 parts of a basic white carbon (CARPLEX #1120, tradename of Shionogi & Co., Ltd., pH of 1% suspension: 11.5, volume median diameter: 13 μm) were uniformly mixed, followed by pulverization by a jet-o-miser to obtain a premix of fenothiocarb. The volume median diameter of fenothiocarb in the premix was measured by a precipitation method and found to be 9.6 μm. Further, the volume median diameter of the basic white carbon in the premix was measured and found to be 6.6 μm. The volume median diameter of the basic white carbon is the volume median diameter of the residue obtained after washing the premix with acetone a few times.

55 Parts of the above premix, 1 part of NEW CALGEN WG-6, tradename of Takemoto Oil & Fat Co., Ltd., 9 parts of DEMOL MS, tradename of Kao Corporation, and 35 parts of clay were mixed by means of a mixer, and then about 30 parts of water was added, followed by kneading and granulation by means of an extrusion granulator equipped with a screen having a pore size of 0.6 mm. After drying at 40°C, the particle size was adjusted by a sieve of from 16 to 48 mesh to obtain a granulated wettable powder.

EXAMPLE 3

63.7 Parts of fenothiocarb and 36.3 parts of a basic white carbon (NIPSIL NA,, tradename of Nippon Silica Industrial Co., Ltd., pH of 1% suspension: 10.2, volume median diameter: 14.3 $\mu$m) were uniformly mixed, followed by pulverization by a jet-o-miser to obtain a premix of fenothiocarb. The volume median diameter of fenothiocarb in the premix was measured and found to be 9.6 $\mu$m. Further, the volume median diameter of the basic white carbon in this premix was measured and found to be 6.9 $\mu$m. The volume median diameter of the basic white carbon is the volume median diameter of the residue obtained after washing the premix with acetone a few times.

55 Parts of the above premix, 1 part of NEW CALGEN WG-6, tradename of Takemoto Oil & Fat Co., Ltd., 9 parts of DEMOL MS, tradename of Kao Corporation and 35 parts of potassium chloride, were mixed by means of a mixer, and then, about 25 parts of water was added, followed by kneading and granulation by means of an extrusion granulator equipped with a screen having a pore size of 0.6 mm. After drying at 40°C, the particle size was adjusted by a sieve of from 16 to 48 mesh to obtain a granulated wettable powder. The volume median diameter of fenothiocarb in the granulated wettable powder was measured by a precipitation method and found to be 9.8 $\mu$m. Further, the volume median diameter of the basic white carbon in this granulated wettable powder was measured and found to be 6.2 $\mu$m. The volume median diameter of the basic white carbon is the volume median diameter of the residue obtained by washing the granulated wettable powder of fenothiocarb with acetone repeatedly and then washing it with distilled water likewise repeatedly.

EXAMPLE 4

3.2 Parts of isopropyl[(S)-1-[(R)-1-(6-fluorobenzothiazol-2-yl)ethylcarbamoyl]-2-methylpropyl]carbamate, 91.32 parts of folpet and 5.48 parts of a basic white carbon (CARPLEX #1120 of tradename, Shionogi & Co., Ltd., pH of 1% suspension: 11.5, volume median diameter: 13 $\mu$m) were uniformly mixed, followed by pulverization by a jet-o-miser to obtain a premix. The volume median diameter of isopropyl[(S)-1-[(R)-1-(6-fluorobenzothiazol-2-yl)ethylcarbamoyl]-2-methylpropyl]carbamate and the volume median diameter of folpet in the premix were measured by a precipitation method and found to be 10.8 $\mu$m and 4.5 $\mu$m, respectively. Further, the volume median diameter of the basic white carbon in this premix was measured and found to be 6.8 $\mu$m. The volume median diameter of the basic white carbon is the volume median diameter of the residue obtained after washing the premix with acetone a few times.

54.75 Parts of the above premix, 2 parts of NEW CALGEN WG-1, tradename of Takemoto Oil & Fat Co., Ltd, 8 parts of DEMOL MS, tradename of Kao Corporation, and 35.25 parts of clay were mixed by means of a mixer, and then, about 10 parts of water was added, followed by kneading and granulation by means of an extrusion granulator equipped with a screen having a pore size of 0.6 mm. After drying at 60°C, the particle size was adjusted by a sieve of from 16 to 48 mesh to obtain a granulated wettable powder.

EXAMPLE 5

8.33 Parts of isopropyl[(S)-1-[(R)-1-(6-fluorobenzothiazol-2-yl)ethylcarbamoyl]-2-methylpropyl]carbamate, 83.34 parts of TPN and 8.33 parts of a basic white carbon (CARPLEX #1120, tradename of Shionogi & Co., Ltd., pH of 1% suspension: 11.5, volume median diameter: 13 $\mu$m) were uniformly mixed, followed by pulverization by a jet-o-miser to obtain a premix. The volume median diameter of isopropyl[(S)-1-[(R)-1-(6-fluorobenzothiazol-2-yl)ethylcarbamoyl]-2-methylpropyl]carbamate and the volume median diameter of TPN in the premix were measured by a precipitation method and found to be 11.3 $\mu$m and 5.2 $\mu$m, respectively. Further, the volume median diameter of the basic white carbon in this premix was measured and found to be 6.8 $\mu$m. The volume median diameter of the basic white carbon is the volume median diameter of the residue obtained after washing the premix with acetone a few times.

60 Parts of the above premix, 2 parts of NEW CALGEN WG-1, tradename of Takemoto Oil & Fat Co., Ltd, 8 parts of DEMOL MS, tradename of Kao Corporation, and 30 parts of clay were mixed by means of a mixer, and then, about 10 parts of water was added, followed by kneading and granulation by means of an extrusion granulator equipped with a screen having a pore size of 0.6 mm. After drying at 60°C, the particle size was adjusted by a sieve of from 16 to 48 mesh to obtain a granulated wettable powder.

EXAMPLE 6

63.7 Parts of fenothiocarb and 36.3 parts of a basic white carbon (EXTRUSIL, tradename of Degussa AG, pH of 1% suspension: 10.2, volume median diameter: 6.7 $\mu$m) were uniformly mixed, followed by pulverization five times by a jet-o-miser to obtain a premix of fenothiocarb. The volume median diameter of fenothiocarb in the premix was measured by a precipitation method and found to be 1.2 $\mu$m. Further, the volume median diameter of the basic white carbon in this premix was measured and found to be 2.2 $\mu$m. The volume median diameter of the basic white carbon is the volume median diameter of the residue obtained after washing the above premix with acetone a few times.

55 Parts of the above premix, 2 parts of NEW CALGEN WG-6, tradename of Takemoto Oil & Fat Co., Ltd., 2 parts of DEMOL MS, tradename of Kao Corporation, 8 parts of SANX P201, tradename of Nippon Paper Industries, Co., Ltd., and 33 parts of clay, were mixed by means of a mixer, and then, about 30 parts of water was added thereto, followed by kneading and granulation by means of an extrusion granulator equipped with a screen having a pore size of 0.6 mm. After drying at 40°C, the particle size was adjusted by a sieve of from 16 to 48 mesh to obtain a granulated wettable powder.

EXAMPLE 7

75.0 Parts of isopropyl[(S)-1-[(R)-1-(6-fluorobenzothiazol-2-yl)ethylcarbamoyl]-2-methylpropyl]carbamate and 25.0 parts of a basic white carbon (CARPLEX #1120, tradename of Shionogi & Co., Ltd., pH of 1% suspension: 11.5, the volume median diameter: 13 $\mu$m) were uniformly mixed, followed by pulverization by a jet-o-miser to obtain a premix. The volume median diameter of isopropyl[(S)-1-[(R)-1-(6-fluorobenzothiazol-2-yl)ethylcarbamoyl]-2-methylpropyl]carbamate in the premix was measured by a precipitation method and found to be 6.5 $\mu$m. Further, the volume median diameter of the basic white carbon in this premix was measured and found to be 7.1 $\mu$m. The volume median diameter of the basic white carbon is the volume median diameter of the residue obtained after washing the premix with acetone a few times.

20 Parts of the above premix, 2 parts of NEW CALGEN WG-6, tradename of Takemoto Oil & Fat Co., Ltd, 8 parts of DEMOL MS, tradename of Kao Corporation, and 70 parts of clay were mixed by means of a mixer, and then, about 10 parts of water was added thereto, followed by kneading and granulation by means of an extrusion granulator equipped with a screen having a pore size of 0.6 mm. After drying at 60°C, the particle size was adjusted by a sieve of from 16 to 48 mesh to obtain a granulated wettable powder.

COMPARATIVE EXAMPLE 1

90 Parts of mepronil and 10 parts of white carbon (CARPLEX #80, tradename of Shionogi & Co., Ltd., pH of 1% suspension: 6.2) were uniformly mixed, followed by pulverization by a jet-o-miser to obtain a premix of mepronil. The volume median diameter of mepronil in this premix was measured by a precipitation method and found to be 8.8 $\mu$m. Further, the volume median diameter of the white carbon in this premix was measured and found to be 7.6 $\mu$m. The volume median diameter of the white carbon is the volume median diameter of the residue obtained after washing the above premix with acetone a few times.

50 Parts of the above premix, 1 part of NEW CALGEN WG-6, tradename of Takemoto Oil & Fat Co., Ltd., 9 parts of DEMOL MS, tradename of Kao Corporation and 40 parts of calcium carbonate, were mixed by means of a mixer, and then, about 10 parts of water was added, followed by kneading and granulation by means of an extrusion granulator equipped with a screen having a pore size of 0.6 mm. After drying at 60°C, the particle size was adjusted by a sieve of from 16 to 48 mesh, to obtain a granulated wettable powder.

COMPARATIVE EXAMPLE 2

90 Parts of mepronil and 10 parts of silica sand were uniformly mixed, followed by pulverization by a jet-o-miser to obtain a premix of mepronil. The volume median diameter of mepronil in the premix was measured by a precipitation method and found to be 8.1 $\mu$m. Further, the volume median diameter of the silica sand in this premix was measured and found to be 8.2 $\mu$m. The volume median diameter of the silica sand is the volume median diameter of the residue obtained after washing the premix with acetone a few times.

50 Parts of the above premix, 1 part of NEW CALGEN WG-6, tradename of Takemoto Oil & Fat Co., Ltd., 9 parts of NEW CALGEN WG-1, tradename of Takemoto Oil & Fat Co., Ltd. and 40 parts of calcium carbonate, were mixed by means of a mixer, and then, about 10 parts of water was added thereto, followed by kneading and granulation by means of an extrusion granulator equipped with a screen having a pore size of 0.6 mm. After drying at 60°C, the particle size was adjusted by a sieve of from 16 to 48 mesh to obtain a granulated wettable powder.

COMPARATIVE EXAMPLE 3

63.7 Parts of fenothiocarb and 36.3 parts of a white carbon (CARPLEX #80, manufactured by Shionogi & Co., Ltd., pH of 1% suspension: 6.2) were uniformly mixed, followed by pulverization by a jet-o-miser to obtain a premix of fenothiocarb. The volume median diameter of fenothiocarb in the premix was measured by a precipitation method and found to be 9.5 μm. Further, the volume median diameter of the white carbon in this premix was measured and found to be 9.0 μm. The volume median diameter of the white carbon is the volume median diameter of the residue obtained after washing the premix with acetone a few times.

55 Parts of the above premix, 1 part of NEW CALGEN WG-6, tradename of Takemoto Oil & Fat Co., Ltd., 9 parts of DEMOL MS, tradename of Kao Corporation and 35 parts of clay were mixed by means of a mixer, and then, about 30 parts of water was added thereto, followed by kneading and granulation by means of an extrusion granulator equipped with a screen having a pore size of 0.6 mm. After drying at 40°C, the particle size was adjusted by a sieve of from 16 to 48 mesh to obtain a granulated wettable powder.

COMPARATIVE EXAMPLE 4

63.7 Parts of fenothiocarb and 36.3 parts of silica sand were uniformly mixed, followed by pulverization by a jet-o-miser to obtain a premix of fenothiocarb. The volume median diameter of fenothiocarb in this premix was measured by a precipitation method, and found to be 8.7 μm. Further, the volume median diameter of the silica sand in this premix was measured and found to be 9.7 μm. The volume median diameter of the silica sand is the volume median diameter of the residue obtained after washing the premix with acetone a few times.

55 Parts of the above premix, 1 part of NEW CALGEN WG-6, tradename of Takemoto Oil & Fat Co., Ltd., 9 parts of DEMOL MS, tradename of Kao Corporation and 35 parts of clay were mixed by means of a mixer and then about 10 parts of water was added thereto, followed by kneading and granulation by means of an extrusion granulator equipped with a screen having a pore size of 0.6 mm. After drying at 40°C, the particle size was adjusted by a sieve of from 16 to 48 mesh to obtain a granulated wettable powder.

COMPARATIVE EXAMPLE 5

63.7 Parts of fenothiocarb and 36.3 parts of a white carbon (CARPLEX FPS-1, manufactured by Shionogi & Co., Ltd., pH of 1% suspension: 6.4, volume median diameter: 3.1 μm) were uniformly mixed, followed by pulverization five times by a jet-o-miser to obtain a premix of fenothiocarb. The volume median diameter of fenothiocarb in this premix was measured by a precipitation method and found to be 0.9 μm. Further, the volume median diameter of the white carbon in this premix was measured and found to be 1.8 μm. The volume median diameter of the white carbon is the volume median diameter of the residue obtained after washing the premix with acetone a few times.

55 Parts of the above premix, 2 parts of NEW CALGEN WG-6, tradename of Takemoto Oil & Fat Co., Ltd., 2 parts of DEMOL MS, tradename of Kao Corporation and 33 parts of clay, were mixed by means of a mixer, and then, about 30 parts of water was added, followed by kneading and granulation by means of an extrusion granulator equipped with a screen having a pore size of 0.6 mm. After drying at 40°C, the particle size was adjusted by a sieve of from 16 to 48 mesh to obtain a granulated wettable powder.

COMPARATIVE EXAMPLE 6

75.0 Parts of isopropyl[(S)-1-[(R)-1-(6-fluorobenzothiazol-2-yl)ethylcarbamoyl]-2-methylpropyl]carbamate and 25.0 parts of silica sand were uniformly mixed, followed by pulverization by a jet-o-miser to obtain a premix. The volume median diameter of isopropyl[(S)-1-[(R)-1-(6-fluorobenzothiazol-2-yl)ethylcarbamoyl]-2-methylpropyl]carbamate in the premix was measured by a precipitation method and found to be 6.9 μm. Further, the volume median diameter of the silica sand in this premix was measured and found to be 8.4 μm. The volume median diameter of the silica sand is the volume median diameter of the residue obtained after washing the premix with acetone a few times.

20 Parts of the above premix, 2 parts of sodium alkylnaphthalenesulfonate, 8 parts of DEMOL MS, tradename of Kao Corporation, and 70 parts of clay were mixed by means of a mixer, and then, about 10 parts of water was added thereto, followed by kneading and granulation by means of an extrusion granulator equipped with a screen having a pore size of 0.6 mm. After drying at 60°C, the particle size was adjusted by a sieve of from 16 to 48 mesh to obtain a granulated wettable powder.

TEST EXAMPLE 1

About 50 g of the formulation obtained in each of Examples and Comparative Examples was put in an aluminum laminated bag, sealed by heat sealing and stored at 54°C for 14 days. With respect to the samples immediately after the production and after the above storage, the disintegration dispersibility in water, the suspension rate and the fineness were measured by the following methods. In a constant temperature water tank of 25°C, a 250 ml cylinder containing 250 ml of 3 degree hard water and equipped with a stopper, was set. 250 mg of each granulated wettable powder was put into the cylinder, and the cylinder was repeatedly inverted at a rate of once every 2 seconds, and the number of times of inversion of the cylinder until the granulated wettable powder was completely disintegrated and dispersed, was shown as the disintegration dispersibility in water. Then, this cylinder was left to stand still in the constant temperature water tank of 25°C, and upon expiration of 15 minutes, 25 ml was sampled from the center of the cylinder, and the agricultural chemical active ingredient was analyzed by high speed liquid chromatography to obtain the suspension rate. Further, 10 g of each granulated wettable powder was put into a 200 ml beaker, and 100 ml of tap water was added thereto, followed by stirring for 5 minutes. The obtained suspension was put into a sieve of 300 mesh, and sufficiently washed with tap water, whereupon the residue was recovered and dried. From the weight of this residue, the proportion passed through the sieve was calculated and shown as the fineness.

The suspension rate is obtained by the following formula.

$$\text{Suspension rate(\%)} = [(B \times 10)/A] \times 100$$

A: The amount of the active ingredient in the initial sample
B: The amount of the active ingredient in the sampled test solution

Table 1

|  | Disintegration dispersibility in water (times) | | Suspension rate (%) | | Fineness (%) | |
|---|---|---|---|---|---|---|
|  | Immediately after the production | 54°C × 14 days | Immediately after the production | 54°C × 14 days | Immediately after the production | 54°C × 14 days |
| Ex. 1 | 5 | 4 | 95.0 | 98.1 | 99.8 | 99.8 |
| Ex. 2 | 5 | 6 | 93.2 | 92.4 | 99.8 | 97.0 |
| Ex. 4 | 2 | 2 | 99.5 | 98.9 | 99.5 | 99.2 |
| Ex. 5 | 2 | 2 | 99.2 | 99.0 | 99.0 | 98.7 |
| Ex. 6 | 5 | 5 | 99.5 | 99.5 | 99.9 | 99.9 |
| Comp. Ex. 1 | 10 | 10 | 87.1 | 73.5 | 95.2 | 87.3 |
| Comp. Ex. 3 | 12 | 12 | 75.0 | 57.4 | 93.2 | 78.7 |
| Comp. Ex. 4 | 10 | 18 | 89.0 | 58.8 | 99.5 | 66.7 |
| Comp. Ex. 5 | 12 | 14 | 86.8 | 62.0 | 99.9 | 80.2 |

TEST EXAMPLE 2

Into a glass beaker having an inner diameter of 6 cm, 20 g of the formulation obtained in each of Examples and Comparative Examples was put, and a weight was placed on the flattened sample so that the pressure would be 25 g/cm$^2$. The sample was left to stand at room temperature for 1 month, whereupon the weight was removed, and the caking state of the formulation was visually inspected. The obtained results are shown in Table 2.

Table 2

| Tested formulation | Caking degree |
|---|---|
| Example 1 | No caking |
| Example 2 | No caking |
| Example 4 | No caking |
| Example 5 | No caking |
| Example 6 | No caking |
| Comparative Example 4 | The entire sample was caked |
| Comparative Example 5 | The sample was partially weakly caked |

TEST EXAMPLE 3

Into a glass beaker having an inner diameter of 6 cm, 20 g of the premix formulation in each of Examples 1 and 7 and Comparative Examples 2 and 6, was put, and a weight was placed on the flattened sample so that the pressure would be 25 g/cm$^2$. The sample was left to stand at room temperature for 1 month, whereupon the weight was removed, and the caking state of the formulation was visually inspected. The obtained results are show in Table 3.

Table 3

| Tested formulation | Caking degree |
| --- | --- |
| Example 1 | No caking |
| Example 7 | No caking |
| Comparative Example 2 | The sample was partially weakly caked |
| Comparative Example 6 | The sample was partially weakly caked |

TEST EXAMPLE 4

With respect to samples formulated by the methods shown in Examples 1 and 7 and Comparative Examples 2 and 6 employing the premix after the inspection of the caking state in Test Example 3, the disintegration dispersibility in water, the suspension rate and the fineness were measured by the following methods. In a constant temperature water tank of 25°C, a 250 ml cylinder containing 250 ml of 3 degree hard water and equipped with a stopper, was set. 250 mg of each granulated wettable powder was put into the cylinder, and the cylinder was inverted repeatedly at a rate of once every two seconds, whereby the number of times of inversion of the cylinder until the granulated wettable powder was completely disintegrated and dispersed, was shown as the disintegration dispersibility in water. Then, this cylinder was left to stand still in a constant temperature water tank of 25°C, and upon expiration of 15 minutes, 25 ml was sampled from the center of the cylinder, and the agricultural chemical active ingredient was analyzed by high speed liquid chromatography to obtain a suspension rate. Further, 10 g of each granulated wettable powder was put into a 200 ml beaker, and 100 ml of tap water was added thereto, followed by stirring for 5 minutes. The obtained suspension was put into a 300 mesh sieve and further sufficiently washed with tap water, whereupon the residue was recovered and dried. From the weight of this residue, the proportion passed through the sieve was calculated and shown as the fineness.
The suspension rate is obtained by the formula employed in Test Example 1.

Table 4

| | Disintegration dispersibility in water (times) | Suspension rate (%) | Fineness (%) |
| --- | --- | --- | --- |
| Example 1 | 5 | 96.7 | 99.8 |
| Example 7 | 6 | 97.4 | 99.6 |
| Comparative Example 2 | 10 | 84.3 | 91.2 |
| Comparative Example 6 | 13 | 83.8 | 92.1 |

INDUSTRIAL APPLICABILITY

With the granulated wettable powder composition of the present invention, as compared with conventional ones, the dispersibility and suspensibility can be improved without being influenced by the type or nature of the agricultural chemical active ingredient.

**Claims**

1. A granulated wettable powder **characterized by** comprising, as essential ingredients,

   (i) fine particles having a volume median diameter of from 1 to 15 $\mu$m of a solid agricultural chemical active ingredient selected from spinosad, DMTP, tebufenpyrad, pyridaphenthion, dimethylvinphos, fenothiocarb, ipconazole, isopropyl[(S)-2-[(R)-1-(6-fluorobenzothiazol-2-yl)-ethylcarbamoyl]-2-methylpropyl]carbamate, mepronil, pencycuron, phthalide, cymoxanil, folpet, mepanipyrim, simetryn, cyhalofop-butyl, fentrazamide, atrazine, fluthacet-methyl, dithiopyr or pyriminobac-methyl, and

(ii) a basic white carbon as a non-crystalline silicon dioxide powder, of which a 1 wt% aqueous suspension has a pH of from 8 to 14, and which has a volume median diameter of from 2 to 7.5 $\mu$m.

2. The granulated wettable powder according to Claim 1, wherein the concentration of the solid agricultural chemical active ingredient is from 5 to 70 wt%, and the content of the basic white carbon is from 0.1 to 50 wt%.

3. The granulated wettable powder according to any one of Claims 1 or 2, wherein the pH of a 1% suspension of the basic white carbon is from 10 to 12.

4. The granulated wettable powder according to any one of Claims 1 to 3, which further contains a surfactant.

5. The granulated wettable powder according to Claim 4, wherein the surfactant is an anionic surfactant.

6. The granulated wettable powder according to Claim 5, wherein the anionic surfactant is at least one member selected from an alkyl sulfate, an alkylnaphthalene sulfonate, a formalin condensate of an alkylnaphthalene sulfonate, and a lignin sulfonate.

7. The granulated wettable powder according to any one of Claims 1 to 6, which further contains from 0.1 to 90 wt% of a carrier for formulation.

8. A process for producing a granulated wettable powder, **characterized by** compounding, as essential ingredients, fine particles having a volume median diameter of from 1 to 15 $\mu$m of a solid agricultural chemical active ingredient selected from spinosad, DMTP, tebufenpyrad, pyridaphenthion, dimethylvinphos, fenothiocarb, ipconazole, isopropyl-[(S)-2-[(R)-1-(6-fluorobenzothiazol-2-yl)- ethylcarbamoyl]-2-methylpropyl]carbamate, mepronil, pencycuron, phthalide, cymoxanil, folpet, mepanipyrim, simetryn, cyhalofop-butyl, fentrazamide, atrazine, fluthacet-methyl, dithiopyr or pyriminobac-methyl, and a basic white carbon as a non-crystalline silicon dioxide powder, of which a 1 wt% aqueous suspension has a pH of from 8 to 14, and which has a volume median diameter of from 2 to 7.5 $\mu$m.

9. The process according to Claim 8, wherein the fine particles of a solid agricultural chemical active ingredient, which have malleability at room temperature and which show a caking property even in storage at a temperature not higher than the melting point, and the basic white carbon having a volume median diameter of from 2 to 7.5 $\mu$m are obtained by mixing said solid agricultural chemical active ingredient and said basic white carbon and pulverizing them together.

10. A process for producing a granulated wettable powder, **characterized by** mixing a solid agricultural chemical active ingredient selected from spinosad, DMTP, tebufenpyrad, pyridaphenthion, dimethylvinphos, fenothiocarb, ipconazole, isopropyl[(S)-2-[(R)-1-(6-fluorobenzothiazol-2-yl)-ethylcarbamoyl]-2-methylpropyl]carbamate, mepronil, pencycuron, phthalide, cymoxanil, folpet, mepanipyrim, simetryn, cyhalofop-butyl, fentrazamide, atrazine, fluthacet-methyl, dithiopyr or pyriminobac-methyl, and a basic white carbon as a non-crystalline silicon dioxide powder, of which a 1 wt% aqueous suspension has a pH of from 8 to 14, followed by pulverization so that the volume median diameter of the basic white carbon becomes to be from 2 to 7.5 $\mu$m and by granulation.

11. The process for producing a granulated wettable powder according to Claim 10, wherein a surfactant is added during the granulation.

**Patentansprüche**

1. Granuliertes benetzbares Pulver, **dadurch gekennzeichnet dass** es als wesentliche Bestandteile umfasst

(i) feine Teilchen mit einem volumenbezogenen Mediandurchmesser von 1 bis 15 $\mu$m eines festen agrochemischen aktiven Bestandteils, ausgewählt aus Spinosad, DMTP, Tebufenpyrad, Pyridaphention, Dimethylvinphos, Fenothiocarb, Ipoconazole, Isopropyl[(S)-2-[(R)-1-(6-fluorobenzothiazol-2-yl)-ethylcarbamoyl]-2-methylpropyl]carbamate, Mepronil, Pencycuron, Phthalide, Cymoxanil, Folpet, Mepanipyrim, Simetryn, Cyhalofop-Butyl, Fentrazamide, Atrazine, Fluthacet-Methyl, Dithiopyr oder Pyriminobac-Methyl, und

(ii) ein basischer weißer Kohlenstoff (white carbon) als ein nichtkristallines Siliziumdioxidpulver von dem eine 1 gewichtsprozentige wässrige Suspension einen pH von 8 bis 14 aufweist, und der einen volumenbezogenen Mediandurchmesser von 2 bis 7,5 μm aufweist.

2. Das granulierte benetzbare Pulver nach Anspruch 1, wobei die Konzentration des festen agrochemischen aktiven Bestandteils von 5 bis 70 Gewichtsprozent beträgt und der Gehalt an basischem, weißem Kohlenstoff von 0,1 bis 50 Gewichtsprozent beträgt.

3. Das granulierte benetzbare Pulver gemäß einem der Ansprüche 1 oder 2, wobei der pH einer 1 %igen Suspension des weißen Kohlenstoffs 10 bis 12 beträgt.

4. Das granulierte benetzbare Pulver nach einem der Ansprüche 1 bis 3, das weiterhin ein Tensid enthält.

5. Das granulierte benetzbare Pulver nach Anspruch 4, wobei das Tensid ein anionisches Tensid ist.

6. Das granulierte benetzbare Pulver nach Anspruch 5, wobei das anionische Tensid mindestens ein Element ausgewählt aus einem Alkylsulfat, einem Alkylnaphthalinsulfonat, einem Formalinkondensat eines Alkylnaphtahalinsulfonats und ein Ligninsulfonat ist.

7. Das granulierte benetzbare Pulver nach einem der Ansprüche 1 bis 6, das weiterhin 0,1 bis 90 Gewichtsprozent eines Trägers zur Formulierung enthält.

8. Verfahren zur Herstellung eines granulierten benetzbaren Pulvers, **gekennzeichnet durch** Vermischen als wesentliche Bestandteile von feinen Teilchen, mit einem volumenbezogenen Mediandurchmesser von 1 bis 15 μm eines festen agrochemischen aktiven Bestandteils ausgewählt aus Spinosad, DMTP, Tebufenpyrad, Pyridaphenthion, Dimethylvinphos, Fenothiocarb, Ipconazole, Isopropyl-[(S)-2-I[(R)-1-(6-fluorobenzothiazol-2-yl)-ethylcarbamoyl]-2-methylpropyl]carbamate, Mepronil, Pencycuron, Phthalide, Cymoxanil, Folpet, Mepanipyrim, Simetryn, Cyhalofop-butyl, Fentrazamide, Atrazine, Fluthacet-Methyl, Dithiopyr oder Pyriminobac-Methyl, und einem basischen weißen Kohlenstoff als nichtkristallines Sliziumdioxidpulver von dem eine 1 gewichtsprozentige wässrige Suspension einen pH von 8 bis 14 aufweist und der einen volumenbezogenen Mediandurchmesser von 2 bis 7,5 μm aufweist.

9. Das Verfahren nach Anspruch 8, wobei die feinen Teilchen eines festen agrochemischen aktiven Bestandteils, die bei Raumtemperatur schmiedbar sind und die selbst bei Lagerung bei einer Temperatur, die nicht höher als der Schmelzpunkt liegt, eine Verbackungseigenschaft zeigen, und der basische weiße Kohlenstoff, der einen volumenbezogenen Mediandurchmesser von 2 bis 7,5 μm aufweist, erhältlich ist durch Vermischen des festen agrochemischen aktiven Bestandteils und des basischen weißen Kohlenstoffs und gemeinsames Pulverisieren.

10. Verfahren zur Herstellung eines granulierten benetzbaren Pulvers, **gekennzeichnet durch** ein Vermischen eines festen agrochemischen aktiven Bestandteils ausgewählt aus Spinosad, DMTP, Tebufenpyrad, Pyridaphenthion, Dimethylvinphos, Fenothiocarb, Ipconazole, Isopropyl-[(S)-2-I[(R)-1-(6-fluorobenzothiazol-2-yl)-ethylcarbamoyl]-2-methylpropyl]carbamate, Mepronil, Pencycuron, Phthalide, Cymoxanil, Folpet, Mepanipyrim, Simetryn, Cyhalofop-butyl, Fentrazamide, Atrazine, Fluthacet-Methyl, Dithiopyr oder Pyriminobac-Methyl, und einem basischen weißen Kohlenstoff als nichtkrisallines Siliziumdioxidpulver von dem eine 1 gewichtsprozentige wässrige Suspension einen pH von 8 bis 14 aufweist, gefolgt von einem Pulverisieren, so dass der volumenbezogene Mediandurchmesser des basischen weißen Kohlenstoffs in den Bereich von 2 bis 7,5 μm fällt, und **durch** Granulierung.

11. Das Verfahren zur Herstellung eines granulierten benetzbaren Pulvers nach Anspruch 10, wobei ein Tensid währen der Granulierung zugegeben wird.

**Revendications**

1. Poudre mouillable granulée **caractérisée en ce qu'**elle comprend, à titre d'ingrédients essentiels :

   (i) de fines particules, ayant un diamètre moyen en volume de 1 à 15 μm, d'un ingrédient actif chimique solide pour l'agriculture choisi parmi le spinosad, le DMTP, le tébufenpyrad, le pyridaphenthion, le diméthylvinphos, le fénothiocarb, l'ipconazole, le [(S)-2-[(R)-1-(6-fluorobenzothiazol-2-yl)-éthylcarbamoyl]-2-méthyl-propyl]carbamate d'isopropyle, le mépronil, le pencycuron, le phtalide, le cymoxanil, le folpet, le mépanipyrim, la simétryne, le cyhalofop-butyl, le fentrazamide, l'atrazine, le fluthacet-méthyl, le dithiopyr et le pyriminobac-méthyl, et
   (ii) un carbone blanc basique sous la forme d'une poudre de dioxyde de silicium non cristallin, dont une sus-

EP 1 407 665 B1

pension aqueuse à 1 % en poids a un pH de 8 à 14, et qui a un diamètre moyen en volume de 2 à 7,5 μm.

2.  Poudre mouillable granulée selon la revendication 1, dans laquelle la concentration de l'ingrédient actif chimique solide pour l'agriculture est de 5 à 70 % en poids, et dont la teneur en le carbone blanc basique est de 0,1 à 50 % en poids.

3.  Poudre mouillable granulée selon l'une quelconque des revendications 1 et 2, dans laquelle le pH d'une suspension à 1 % du carbone blanc basique est de 10 à 12.

4.  Poudre mouillable granulée selon l'une quelconque des revendications 1 à 3, qui contient en outre un tensioactif.

5.  Poudre mouillable granulée selon la revendication 4, dans laquelle le tensioactif est un tensioactif anionique.

6.  Poudre mouillable granulée selon la revendication 5, dans laquelle le tensioactif anionique est au moins un composé choisi parmi un alkylsulfate, un alkylnaphtalènesulfonate, un produit de condensation de formaline et d'un alkylnaphtalènesulfonate, et un ligninesulfonate.

7.  Poudre mouillable granulée selon l'une quelconque des revendications 1 à 6, qui contient en outre de 0,1 à 90 % en poids d'un support pour formulation.

8.  Procédé pour produire une poudre mouillable granulée, **caractérisé par** la combinaison, à titre d'ingrédients essentiels, de fines particules, ayant un diamètre moyen en volume de 1 à 15 μm, d'un ingrédient actif chimique solide pour l'agriculture choisi parmi le spinosad, le DMTP, le tébufenpyrad, le pyridaphenthion, le diméthylvinphos, le fénothiocarb, l'ipconazole, le [(S)-2-[(R)-1-(6-fluorobenzothiazol-2-yl)-éthylcarbamoyl]-2-méthylpropyl]carbamate d'isopropyle, le mépronil, le pencycuron, le phtalide, le cymoxanil, le folpet, le mépanipyrim, la simétryne, le cyhalofop-butyl, le fentrazamide, l'atrazine, le fluthacet-méthyl, le dithiopyr et le pyriminobac-méthyl, et d'un carbone blanc basique sous la forme d'une poudre de dioxyde de silicium non cristallin, dont une suspension aqueuse à 1 % en poids a un pH de 8 à 14, et qui a un diamètre moyen en volume de 2 à 7,5 μm.

9.  Procédé selon la revendication 8, dans lequel les fines particules d'un ingrédient actif chimique solide pour l'agriculture, qui sont malléables à la température ambiante et qui présentent une propriété d'agglutination même lors d'un stockage à une température ne dépassant pas le point de fusion, et le carbonate blanc basique ayant un diamètre moyen en volume de 2 à 7,5 μm, sont obtenus par mélange dudit ingrédient actif chimique solide pour l'agriculture et dudit carbone blanc basique, et pulvérisation de ceux-ci ensemble.

10. Procédé pour produire une poudre mouillable granulée, **caractérisé par** le mélange d'un ingrédient actif chimique solide pour l'agriculture choisi parmi le spinosad, le DMTP, le tébufenpyrad, le pyridaphenthion, le diméthylvinphos, le fénothiocarb, l'ipconazole, le [(S)-2-[(R)-1-(6-fluorobenzothiazol-2-yl)-éthylcarbamoyl]-2-méthylpropyl]carbamate d'isopropyle, le mépronil, le pencycuron, le phtalide, le cymoxanil, le folpet, le mépanipyrim, la simétryne, le cyhalofop-butyl, le fentrazamide, l'atrazine, le fluthacet-méthyl, le dithiopyr et le pyriminobac-méthyl, et d'un carbone blanc basique sous la forme d'une poudre de dioxyde de silicium non cristallin, dont une suspension aqueuse à 1 % en poids a un pH de 8 à 14, suivi d'une pulvérisation de telle sorte que le diamètre moyen en volume du carbone blanc basique soit de 2 à 7,5 μm, et d'une granulation.

11. Procédé pour produire une poudre mouillable granulée selon la revendication 10, dans lequel un tensioactif est ajouté durant la granulation.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2234678 A
- JP 59193803 A
- JP 62036302 A
- JP 5043402 A
- JP 7126106 A
- JP 8034702 A
- JP 51001649 A
- JP 57163303 A
- JP 61236701 A
- JP 62263101 A
- JP 3264502 A

**Non-patent literature cited in the description**

- Noyaku Seizaigaku. Kabushiki Kaisha Naneido, 20 January 1965, 55-56